(19) Europäisches Patentamt
European Patent Office
Office européen des brevets

(11) **EP 4 365 228 A1**

(12) **EUROPEAN PATENT APPLICATION**
published in accordance with Art. 153(4) EPC

(43) Date of publication:
**08.05.2024 Bulletin 2024/19**

(21) Application number: **22832563.5**

(22) Date of filing: **31.03.2022**

(51) International Patent Classification (IPC):
*C08L 3/02* (2006.01)          *C08L 29/04* (2006.01)
*D01F 6/50* (2006.01)          *D01F 9/00* (2006.01)

(52) Cooperative Patent Classification (CPC):
**C08L 3/02; C08L 29/04; D01F 6/50; D01F 9/00**

(86) International application number:
**PCT/JP2022/016894**

(87) International publication number:
**WO 2023/276402 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2021 JP 2021107872**

(71) Applicant: **KURARAY CO., LTD.**
**Kurashiki-shi, Okayama 710-0801 (JP)**

(72) Inventors:
• **KAGAWA, Genki**
**Okayama-shi, Okayama 702-8601 (JP)**
• **SHIBATA, Shohei**
**Okayama-shi, Okayama 702-8601 (JP)**
• **WASHITAKE, Yosuke**
**Okayama-shi, Okayama 702-8601 (JP)**
• **KATSUYA, Satoshi**
**Okayama-shi, Okayama 702-8601 (JP)**

(74) Representative: **Müller-Boré & Partner**
**Patentanwälte PartG mbB**
**Friedenheimer Brücke 21**
**80639 München (DE)**

(54) **STARCH COMPOSITION AND MOLDED BODY**

(57)     The present invention relates to a starch composition comprising a starch and a vinyl alcohol-based polymer, wherein the starch has an amylopectin ratio of 70% or more, the vinyl alcohol-based polymer has a degree of saponification of 96 mol% or less, and based on a total mass of the starch and the vinyl alcohol-based polymer, a ratio of the starch is 40 to 90% by mass and a ratio of the vinyl alcohol-based polymer is 10 to 60% by mass.

EP 4 365 228 A1

**Description**

TECHNICAL FIELD

The present invention relates to a starch composition comprising a starch and a vinyl alcohol-based polymer, and a formed article formed of the composition.

BACKGROUND ART

Formed articles containing a vinyl alcohol-based polymer have been studied as materials having solubility in water, and have been widely used. Starch is also attracting attention as a natural product-based polymer serving as a raw material of a biodegradable polymer material, and its use has been studied.
Formed articles such as fibers and films obtained by spinning, forming film or the like using a composition in which a vinyl alcohol-based polymer and a starch are combined, and have been studied and reported. For example, Patent Document 1 describes a biodegradable fiber formed of a composition comprising a starch and a polyvinyl alcohol-based polymer. Patent Document 2 describes a water-soluble fiber formed of a composition comprising an oxyalkylene group-containing polyvinyl alcohol-based resin and a starch. Furthermore, Non-Patent Documents 1 and 2 describe starch-based biodegradable plastics insoluble in water.

PRIOR ART DOCUMENTS

PATENT DOCUMENTS

Patent Document 1: JP-A-H3-249208
Patent Document 2: JP-A-H4-153309

NON-PATENT DOCUMENTS

Non-Patent Document 1: Kobunshi Ronbunshu (Japanese Journal of Polymer Science and Technology), Vol. 50, No. 10, pp. 767-774
Non-Patent Document 2: "Biodegradable Polymers and Plastics", The Royal Society of Chemistry, pp. 101-110

SUMMARY OF THE INVENTION

PROBLEMS TO BE SOLVED BY THE INVENTION

Conventional formed articles such as fibers and films formed of a composition comprising a starch and a vinyl alcohol-based polymer do not necessarily have both high solubility in water and high biodegradability. For example, the biodegradable fiber composed of a starch and a vinyl alcohol-based polymer described in Patent Document 1 does not focus on the solubility in water of the fiber at all, and cannot be said to have solubility in water. The water-soluble fiber described in Patent Document 2 does not focus on biodegradability of the fiber at all, and cannot be said to have biodegradability. The starch-based biodegradable plastics described in Non-Patent Documents 1 and 2 are insoluble in water. Therefore, although compositions in which a starch and a vinyl alcohol-based polymer are combined have been studied, there still remains a demand for further enhancing both solubility in water and biodegradability. Thus, an object of the present invention is to provide a starch composition and a formed article having both high solubility in water and high biodegradability.

SOLUTIONS TO THE PROBLEMS

The present inventors conducted detailed studies in order to solve the above problems, and have accomplished the present invention. That is, the present invention includes the following preferred embodiments.

[1] A starch composition comprising a starch and a vinyl alcohol-based polymer, wherein the starch has an amylopectin ratio of 70% or more, the vinyl alcohol-based polymer has a degree of saponification of 96 mol% or less, a ratio of the starch to a total mass of the starch and the vinyl alcohol-based polymer is 40 to 90% by mass, and a ratio of the vinyl alcohol-based polymer to a total mass of the starch and the vinyl alcohol-based polymer is 10 to 60% by mass.

[2] The starch composition according to [1], wherein the starch composition has a dissolving temperature in water of 50°C or lower.

[3] The starch composition according to [1] or [2], wherein the starch composition further comprises a plasticizer.

[4] The starch composition according to any one of [1] to [3], wherein an amount of a structural unit derived from a vinyl monomer containing an oxyalkylene group in the vinyl alcohol-based polymer is 1 mol% or less based on an amount of all structural units contained in the vinyl alcohol-based polymer.

[5] The starch composition according to any one of [1] to [4], wherein an amount of a structural unit other than a structural unit derived from a vinyl ester monomer, a vinyl alcohol structural unit, and a vinyl acetal structural unit in the vinyl alcohol-based polymer is 10% by mass or less based on an amount of all structural units contained in the vinyl alcohol-based polymer.

[6] The starch composition according to any one of [1] to [5], wherein a biodegradation rate in a soil at 14 days is 50% or more.

[7] A formed article formed of the starch composition according to any one of [1] to [6].

[8] The formed article according to [7], wherein the formed article is a film, a fiber, a nonwoven fabric, a woven fabric, a braid, or a tow.

EFFECTS OF THE INVENTION

The starch composition of the present invention can provide a starch composition and a formed article having high solubility in water and high biodegradability.

DETAILED DESCRIPTION

Hereinafter, embodiments of the present invention will be described in detail. The scope of the present invention is not limited to the embodiments described herein, and various modifications can be made without departing from the spirit of the present invention.

(Starch Composition)

The starch composition of the present invention is a starch composition comprising a starch and a vinyl alcohol-based polymer, wherein the starch has an amylopectin ratio of 70% or more, the vinyl alcohol-based polymer has a degree of saponification of 96 mol% or less, and based on a total mass of the starch and the vinyl alcohol-based polymer, a ratio of the starch is 40 to 90% by mass and a ratio of the vinyl alcohol-based polymer is 10 to 60% by mass. Thanks to using such a starch and a vinyl alcohol-based polymer at such a specific ratio, the starch composition and the formed article are easily dissolved even in water at a relatively low temperature such as 50°C or lower, so that high solubility in water is obtained. In addition, the biodegradability of the entire composition and the biodegradability of the vinyl alcohol-based polymer contained in the composition can also be enhanced. If the solubility in water and the biodegradability of the starch composition itself can be enhanced, the solubility in water and the biodegradability of the formed article formed of the starch composition can also be enhanced.

The starch composition of the present invention is a composition comprising the starch and the vinyl alcohol-based polymer described later, wherein based on the total mass of the starch and the vinyl alcohol-based polymer, the ratio of the starch is 40 to 90% by mass and the ratio of the vinyl alcohol-based polymer is 10 to 60% by mass. When the ratio of the starch based on the total mass of the starch and the vinyl alcohol-based polymer is less than 40% by mass, in other words, when the ratio of the vinyl alcohol-based polymer exceeds 60% by mass, sufficient biodegradability of the starch composition cannot be obtained. In addition, when the ratio of the starch based on the total mass of the starch and the vinyl alcohol-based polymer exceeds 90% by mass, in other words, when the ratio of the vinyl alcohol-based polymer is less than 10% by mass, it is difficult to obtain a formed article formed of the starch composition.

The ratio of the starch to the total mass of the starch and the vinyl alcohol-based polymer is preferably 44% by mass or more, more preferably 50% by mass or more, still more preferably more than 50% by mass, still more preferably 55% by mass or more, and extremely preferably 60% by mass or more from the viewpoint of easily enhancing the solubility in water and the biodegradability of the starch composition. In this case, for the same reason, the ratio of the vinyl alcohol-based polymer to the total mass of the starch and the vinyl alcohol-based polymer is preferably 66% by mass or less, more preferably 50% by mass or less, still more preferably less than 50% by mass, further preferably 45% by mass or less, and extremely preferably 40% by mass or less. In addition, from the viewpoint of improving the formability when a formed article is manufactured from the starch composition and increasing the strength of the resulting formed article, the ratio of the starch to the total mass of the starch and the vinyl alcohol-based polymer is preferably 85% by mass or less, more preferably 80% by mass or less, still more preferably 78% by mass or less, and further preferably 76% by mass or less. In this case, for the same reason, the ratio of the vinyl alcohol-based polymer to the total mass of the starch and the vinyl alcohol-based polymer is preferably 15% by mass or more, more preferably 20% by mass or more, still more preferably 22% by mass or more, and further preferably 24% by mass or more.

The ratio of the starch or the vinyl alcohol-based polymer to the total mass of the starch and the vinyl alcohol-based polymer may be calculated from the mixing ratio of the respective raw materials in producing the starch composition, or may be calculated, for example, by fractionating and analyzing the starch composition forming a formed article such as a fiber by liquid chromatography or the like.

The total amount of the starch and the vinyl alcohol-based polymer contained in the starch composition of the present invention is preferably 60% by mass or more, more preferably 70% by mass or more, still more preferably 80% by mass or more, further preferably 85% by mass or more, and extremely preferably 90% by mass or more based on the overall amount of the starch composition of the present invention.

Starch

The starch composition of the present invention comprises a starch, and the starch has an amylopectin ratio of 70% or more. When the amylopectin ratio of the starch is less than 70%, it is impossible to sufficiently enhance both the solubility in water and the biodegradability of the starch composition together in parallel. The amylopectin ratio of the starch is preferably 75% or more, more preferably 80% or more, still more preferably more than 80%, further preferably 81% or more, and particularly preferably 82% or more from the viewpoint of enhancing the solubility in water and the biodegradability of the starch composition. When very high solubility in water of the starch composition is required, the amylopectin ratio of the starch may be preferably 85% or more, more preferably 90% or more, and still more preferably 95% or more from the viewpoint of further enhancing the solubility in water of the starch composition. The upper limit of the amylopectin ratio is just required to be 100% or less. The amylopectin ratio means the mass ratio of amylopectin where the total mass of amylose and amylopectin contained in a starch is 100%. The amylopectin ratio can be measured, for example, by colorimetry using an iodine reactant or the quantitative method using concanavalin A described in Carbohydrate Research, Vol. 180, 301-313 or Starch/Starke, Vol. 42, 302-305.

The starch contained in the starch composition of the present invention is not particularly limited as long as the amylopectin ratio is 70% or more, and examples thereof include corn starch, potato starch, wheat starch, rice starch, tapioca starch, sweet potato starch, sago palm starch, soybean starch, arrowroot starch, bracken starch, lotus starch, cassava starch, waxy corn starch, high amylose corn starch, commercially available amylose powder, and modified products thereof. Examples of the modified starch include cationic starch, pregelatinized starch, oxidized starch, etherified starch, acetylated starch, modified amylose corn starch, esterified high amylose corn starch, and hydrophobized waxy starch. The above exemplification does not mean that, for example, any corn starch has an amylopectin ratio of 70% or more, but means that, for example, among starches commercially available as corn starch, starch having an amylopectin ratio of 70% or more can be used, or starch having an amylopectin ratio adjusted to 70% or more can be used. The starch composition of the present invention may contain one starch or may contain two or more starches. When the starch composition of the present invention contains one starch, it is just required that the amylopectin ratio of this starch is 70% or more. When the starch composition of the present invention contains two or more starches, it is just required that the amylopectin ratio as the whole starch contained in the starch composition of the present invention is 70% or more. In this case, the weighted average of the respective amylopectin ratios of two or more starches contained in the starch composition may be used as the amylopectin ratio of the whole starch, or the amylopectin ratio measured for a mixture of two or more starches may be used as the amylopectin ratio of the whole starch. When the amylopectin ratio as the whole starch is calculated by weighted average, the ratio can be determined from the amylopectin ratio of each starch using the following formula.

$$\text{Amylopectin ratio (\%) as whole starch} = \Sigma\,(n_a i \times M_a i)/100$$

$n_a i$: Amylopectin ratio of each starch (%)
$M_a i$: Ratio (% by weight) of each starch in whole starch

Vinyl alcohol-based polymer

The starch composition of the present invention further comprises a vinyl alcohol-based polymer, and the degree of saponification of the vinyl alcohol-based polymer is 96 mol% or less. When the degree of saponification of the vinyl alcohol-based polymer exceeds 96 mol%, both the solubility in water and the biodegradability of the starch composition cannot be sufficiently enhanced together. The degree of saponification of the vinyl alcohol-based polymer is preferably 94 mol% or less, more preferably 92 mol% or less, and still more preferably 90 mol% or less from the viewpoint of easily enhancing the solubility in water and the biodegradability of the starch composition. In addition, the degree of saponification of the vinyl alcohol-based polymer is preferably 80 mol% or more, more preferably 81 mol% or more, still more preferably 82 mol% or more, further preferably 83 mol% or more, and particularly preferably 84 mol% or more from the viewpoint of enhancing the formability (for example, spinnability or film-formability) in producing a formed article formed of a starch composition. The degree of saponification of the vinyl alcohol-based polymer can be measured in accordance with JIS K 6726.

As the vinyl alcohol-based polymer contained in the starch composition of the present invention, one vinyl alcohol-based polymer as described later may be used, or two or more thereof may be used in combination. When the starch composition of the present invention contains one vinyl alcohol-based polymer, it is just required that the degree of saponification of the vinyl alcohol-based polymer is 96 mol% or less. When the starch composition of the present invention contains two or more vinyl alcohol-based polymers, it is just required that the degree of saponification of the vinyl alcohol-based polymer as a whole contained in the starch composition of the present invention is 96 mol% or less. In this case, the degree of saponification of the vinyl alcohol-based polymer as a whole can be determined from the degree of saponification of each vinyl alcohol-based polymer using the following formula.

Degree of saponification (mol%) of vinyl alcohol-based polymer as a whole = $\Sigma\, (n_b i \times M_b i)/100$

$n_b i$: Degree of saponification (mol%) of each vinyl alcohol-based polymer
$M_b i$: Ratio (wt%) of each vinyl alcohol-based polymer in all vinyl alcohol-based polymers

The average degree of polymerization (viscosity average degree of polymerization) of the vinyl alcohol-based polymer contained in the starch composition of the present invention is not particularly limited, but is preferably 2,450 or less, and more preferably 1,800 or less from the viewpoint of enhancing both the solubility in water and the biodegradability of the starch composition. The average degree of polymerization is preferably 500 or more, more preferably 700 or more, and still more preferably 1,000 or more from the viewpoint of improving the formability of the formed article formed of the starch composition and increasing the strength of the resulting formed article. The average degree of polymerization can be measured in accordance with JIS K 6726, and for example, can be measured by the method described in the section of Examples.

The vinyl alcohol-based polymer contained in the starch composition of the present invention is one resulting from saponification of a vinyl ester polymer obtained by polymerizing a vinyl ester monomer. Examples of the vinyl ester monomer include vinyl formate, vinyl acetate, vinyl propionate, vinyl valerate, vinyl laurate, vinyl stearate, vinyl benzoate, vinyl pivalate, and vinyl versatate.

The vinyl ester polymer is preferably one obtained using one vinyl ester monomer or two or more vinyl ester monomers as a monomer, and more preferably one obtained using one vinyl ester monomer as a monomer. The vinyl ester polymer may be a copolymer of one vinyl ester monomer or more vinyl ester monomers and other monomers copolymerizable therewith.

Examples of the other monomers copolymerizable with the vinyl ester monomer(s) include ethylene; olefins having 3 to 30 carbon atoms such as propylene, 1-butene, and isobutene; acrylic acid or salts thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid or salts thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives such as acrylamide, N-methylacrylamide, N-ethylacrylamide, N,N-dimethylacrylamide, diacetone acrylamide, acrylamidopropane sulfonic acid or salts thereof, acrylamide propyl dimethylamine or salts thereof, and N-methylol acrylamide or derivatives thereof; methacrylamide derivatives such as methacrylamide, N-methylmethacrylamide, N-ethylmethacrylamide, methacrylamidopropane sulfonic acid or salts thereof, methacrylamidopropyldimethylamine or salts thereof, N-methylolmethacrylamide or derivatives thereof; N-vinylamides such as N-vinylformamide, N-vinylacetamide, and N-vinylpyrrolidone; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides such as acrylonitrile and methacrylonitrile; vinyl halides such as vinyl chloride, vinylidene chloride, vinyl fluoride, and vinylidene fluoride; allyl compounds such as allyl acetate and allyl chloride; maleic acid or salts, esters or acid anhydride thereof; itaconic acid or salts, esters or acid anhydride thereof; vinylsilyl compounds such as vinyltrimethoxysilane; and isopropenyl acetate. The vinyl ester polymer may have structural units derived from one of or two or more of these other monomers.

The proportion of the structural units derived from the other monomers in the vinyl ester polymer is preferably 15 mol% or less, more preferably 5 mol% or less, still more preferably 3 mol% or less, further preferably 2 mol% or less, particularly preferably 1 mol% or less, still particularly preferably 0.5 mol% or less, extremely preferably 0.2 mol% or less, and still extremely preferably 0 mol% based on the number of moles of all structural units constituting the vinyl ester polymer from the viewpoint of enhancing the solubility in water and the biodegradability of the starch composition.

The vinyl alcohol-based polymer contained in the starch composition of the present invention is obtained by saponifying the vinyl ester polymer described above. The vinyl alcohol-based polymer used in the starch composition of the present invention may be a vinyl alcohol-based polymer having at least one functional group selected from the group consisting of a sulfonic acid group, a sulfonate group, a maleic acid group, an itaconic acid group, an acrylic acid group, and a methacrylic acid group, but from the viewpoint of enhancing biodegradability, an unmodified vinyl alcohol-based polymer substantially free from such a functional group is preferable.

The amount of the structural unit derived from the vinyl monomer containing an oxyalkylene group in the vinyl alcohol-based polymer contained in the starch composition of the present invention is not particularly limited, but from the viewpoint of the formability of the composition, the amount is preferably 1 mol% or less, more preferably 0.5 mol% or less, still more preferably 0.1 mol% or less, further preferably less than 0.1 mol%, particularly preferably 0.05 mol% or less, and still particularly preferably 0.01 mol% or less based on the amount of all structural units contained in the vinyl alcohol-based polymer. It is still more preferable that the vinyl alcohol-based polymer is free from a structural unit derived from a vinyl monomer containing an oxyalkylene group.

The vinyl alcohol-based polymer contained in the starch composition of the present invention can be obtained by saponifying a vinyl ester polymer resulting from polymerization of a vinyl ester monomer as described above, and the polymer has a structural unit derived from a vinyl ester monomer and a vinyl alcohol structural unit which is a structural unit obtained by saponifying a structural unit derived from the vinyl ester monomer. Further, the polymer optionally has a vinyl acetal structural unit resulting from acetalization of a vinyl alcohol structural unit. The amount of the structural units other than the structural units described above (the structural unit derived from the vinyl ester monomer, the vinyl alcohol structural unit, and the vinyl acetal structural unit) in the vinyl alcohol-based polymer contained in the starch composition of the present invention is not particularly limited, but from the viewpoint of the formability and the solubility in water of the composition, the amount is preferably 10% by mass or less, more preferably 5% by mass or less, still more preferably 3% by mass or less, and further preferably 1% by mass or less based on the amount of all structural units contained in the vinyl alcohol-based polymer.

Plasticizer

The starch composition of the present invention may comprise a plasticizer in addition to the starch and the vinyl alcohol-based polymer as long as the effect of the present invention is not inhibited. The type and amount of the plasticizer optionally contained in the starch composition of the present invention can be determined in view of the use and the formability of the formed article formed of the composition. The plasticizer is not particularly limited, and examples thereof include sugar alcohols and polyhydric alcohols. When the starch composition of the present invention contains a plasticizer, one plasticizer may be used, or two or more plasticizers may be used. When the starch composition of the present invention contains a plasticizer, the content of the plasticizer is preferably 20% by mass or less, more preferably 15% by mass or less, and still more preferably 10% by mass or less based on the total mass of the starch, the vinyl alcohol-based polymer, and the plasticizer.

Other components

The starch composition of the present invention may comprise other components in addition to the starch and the vinyl alcohol-based polymer described above and the optionally contained plasticizer as long as the effect of the present invention is not inhibited. Examples of the optional other components include various additives such as polymers other than vinyl alcohol-based polymers and starches, a crosslinking agent, an antioxidant, a stabilizer, a lubricant, a processing aid, an antistatic agent, a colorant, an impact resistance aid, and a foaming agent. When the starch composition of the present invention comprises the resin components or various additives, the content thereof is preferably 20% by mass or less, more preferably 15% by mass or less, and still more preferably 10% by mass or less based on the total mass of the starch and the vinyl alcohol-based polymer.

The biodegradation rate of the starch composition of the present invention in the soil at 14 days is preferably 50% or more, more preferably 60% or more, still more preferably 70% or more, and further preferably 80% or more. The biodegradation rate of the starch composition in the soil at 14 days can be measured by charging 0.3 g of the starch composition into 150 g of the soil, and measuring the degradation rate of the entire starch composition after being left at rest for 14 days by calculating the amount of oxygen consumed by microorganisms following the biodegradation of the starch composition on the basis of a change in the atmospheric pressure in the system. Here, the above-specified vinyl alcohol-based polymer contained in the starch composition is hardly biodegraded, but it is considered that owing to the fact that the starch composition of the present invention contains the specific starch and the specific vinyl alcohol-based polymer at the specific mass ratio, the biodegradability of the vinyl alcohol-based polymer can be synergistically enhanced, and as a result, the biodegradability of the starch composition as a whole can be enhanced. Therefore, the starch composition of the present invention has high biodegradability in the soil even when attention is paid to the degradation rate of the vinyl alcohol-based polymer which is hardly biodegraded.

The dissolving temperature in water of the starch composition of the present invention is preferably 50°C or lower, more preferably 45°C or lower, and still more preferably 40°C or lower. The dissolving temperature in water is a temperature at which the starch composition is completely dissolved when 0.1 g of the starch composition is added to 50 g of pure water at 0°C and the water temperature is raised by 2.5°C per minute with stirring at 500 rpm.

(Formed article)

A foamed article superior in solubility in water and biodegradability can be obtained using the starch composition of the present invention. The present invention also provides a formed article formed of the starch composition of the present invention. The shape of the formed article formed of the starch composition of the present invention is not particularly limited, and the starch composition can be formed into various forms, and examples thereof include a film, a fiber, a nonwoven fabric, a woven fabric, a braid, and a tow. The formed article is preferably a film or a fiber. The method for producing a foamed article using the starch composition of the present invention is not particularly limited, and the starch composition of the present invention may be processed by various conventionally known production methods to produce a formed article.

In one preferred embodiment of the present invention, when the formed article of the present invention is a fiber, this can be produced by a production method including, for example, at least the following steps:

(1) a spinning dope preparation step of obtaining a spinning dope containing a starch, a vinyl alcohol-based polymer, a solvent, and, as necessary, a plasticizer and other components;
(2) an unstretched fiber forming step of extruding the spinning dope into dry air and removing the solvent to form an unstretched fiber; and
(3) a stretching step of stretching the unstretched fiber.

In the spinning dope preparation step (1), a spinning dope is prepared by mixing a starch, a vinyl alcohol-based polymer, a solvent, and, as necessary, a plasticizer, etc. Examples of the solvent include water, dimethyl sulfoxide (DMSO), glycerin, ethylene glycol, and mixed solvents thereof. From the viewpoint of the solubility of polymers and ease of removal of the solvent, it is preferable to use water as the solvent. In a preferred embodiment, it is preferable to prepare a spinning dope by dissolving a starch, a vinyl alcohol-based polymer, a solvent, and, as necessary, a plasticizer using a batch-type dissolution tank and/or an extruder. The temperature of the dissolution tank is preferably approximately 100 to 150°C.

In the unstretched fiber forming step (2), unstretched fibers are formed from the spinning dope obtained in the step (1) by a dry spinning method. Examples of the dry spinning method include a method in which a spinning dope is extruded through a nozzle into heated dry air to evaporate and remove a solvent to form a fiber. The fiber dried may be wound using a winding device or the like. The number of holes of the nozzle is not particularly limited, and is, for example, 10 to 1000. The temperature of the dry air is not particularly limited as long as it is a temperature at which the solvent can be removed, but is preferably 50 to 200°C, and more preferably 60 to 150°C.

In the stretching step (3), the unstretched fiber obtained in the step (2) is stretched. From the viewpoint of easily enhancing the mechanical performance of the fiber, the stretch ratio is preferably 1.1 times or more, more preferably 3.0 times or more, still more preferably 3.5 times or more, further preferably 4.0 times or more, particularly preferably 4.5 times or more, and still particularly preferably 5.0 times or more. The stretching temperature is preferably 100°C or higher, more preferably 110°C or higher, and still more preferably 120°C or higher, and is preferably 200°C or lower, more preferably 190°C or lower, and still more preferably 180°C or lower. The stretching time is preferably 5 seconds or more, more preferably 10 seconds or more, and is preferably 60 seconds or less, more preferably 40 seconds or less. The stretching can be performed by a conventional method, and for example, the stretching may be performed in a hot air furnace.

In another preferred embodiment of the present invention, when the formed article of the present invention is a film, the film can be formed by a film forming method commonly used for forming a film, such as a casting film forming method, a wet film forming method, a dry film forming method, an extrusion film forming method, a melt film forming method, a coating method, a casting method, or a blown film forming method. Among them, the formed article can be produced by a method including, for example, at least the following steps:

(1) a resin solution preparation step of obtaining a resin solution comprising a starch, a vinyl alcohol-based polymer, a solvent, and, as necessary, a plasticizer and other components;
(2) a coating film forming step of applying the resin solution to a substrate and removing the solvent to obtain a coating film; and
(3) a peeling step of peeling the coating film from the substrate, as necessary.

In the resin solution preparation step (1), a resin solution is prepared by mixing a starch, a vinyl alcohol-based polymer, a solvent, and, as necessary, a plasticizer, etc. As the solvent, the solvents described above for the spinning dope preparation step (1) may be used. In a preferred embodiment, it is preferable to prepare a resin solution by dissolving a starch, a vinyl alcohol-based polymer, a solvent, and, as necessary, a plasticizer using a batch-type dissolution tank and/or an extruder. The temperature of the dissolution tank is preferably approximately 60 to 150°C.

In the coating film forming step (2), the resin solution is applied to a substrate, and then the solvent is removed to afford a coating film. The casting surface may be of any material as long as the material is smooth and hard such as steel, aluminum, glass, and a polymer (for example, polyolefin, polyethylene, polyamide, polyvinyl chloride, polycarbonate, or polyhalocarbon). The evaporation rate of an aqueous solvent can be increased by heating the casting surface or exposing a deposited solution to, for example, heated air or infrared radiation. The casting surface may be flat or is obtained by making it in a standard (drum-type) industrial film-making casting machine and then drying it in an oven. The heating temperature is not particularly limited as long as it is a temperature at which the solvent can be removed, but is preferably 50 to 200°C, and more preferably 60 to 150°C. The removal of the solvent may be performed using hot air, or may be performed by heating under vacuum conditions.

The peeling step (3) may be performed as necessary, and a film comprising the starch composition of the present invention is obtained by peeling the dry film from the substrate.

Since the formed article formed of the starch composition of the present invention has high solubility in water and high biodegradability with which the formed article is degraded in a natural environment such as a soil environment or a water environment, it can be used as various formed articles. For example, when the formed article is a fiber, the fiber can also be used as various fiber structures. For example, the fiber can be processed into a fiber structure such as a cut fiber, a filament, a spun yarn, a fabric (woven or knitted fabric, dry nonwoven fabric, and wet nonwoven fabric), a rope, or a string-like article. When the formed article formed of the starch composition of the present invention is a film, the film can also be used as a packaging material.

In addition, the formed article formed of the starch composition of the present invention can be suitably used for the following applications, for example.

Air, oil, and water filters; cleaner filters; furnace filters; face masks; coffee filters, tea or coffee bags; heat insulating materials and sound insulating materials; disposable sanitary products such as diapers, feminine pads, and urinary incontinence articles; biodegradable woven fabrics for improving water absorbability and flexibility of garment such as ultra fine fibers or breathable fabrics; electrostatically charged structural webs for collecting and removing dust; hard paper webs such as stiffeners and wrappers, writing papers, newsprint papers, and corrugated paperboards, and thin paper webs such as toilet papers, paper towels, napkins, and tissue papers; medical applications such as surgical drapes, wound bandages, dressings, or skin patches and self-dissolving sutures; dental applications such as dental floss and toothbrush bristles; agricultural applications such as green houses, tunnels, and mulch films; fishing applications such as fishing lines, fishing guts, fishing baits, and fishing nets; and packaging applications such as plastic bags, packaging materials, food trays, and bags.

An odor absorber, a termite repellent, an insecticide, a rodenticide, or the like may be added to a formed article formed of the starch composition of the present invention. The resulting formed article absorbs water and oil, and can potentially be used for water and oil leak cleaning or controlled water retention and water discharge applications for agriculture or horticulture.

The starch compositions of the present invention may be incorporated into other materials, such as saw dust, wood pulp, plastic, and concrete, to form composite materials for use in building materials, such as walls, support beams, press plates, dry wall and backing materials, and ceiling tiles. The starch compositions of the present invention may also be incorporated into other medical applications, such as plaster cast, splints, and tongue depressors, as well as into logs for fireplace decoration and/or combustion.

EXAMPLES

Hereinafter, the present invention is described by way of Examples, but the present invention is not limited by these Examples. Note that % in Examples relates to mass unless otherwise specified. First, measurement methods and evaluation methods are described below.

<Degree of polymerization>

The degree of polymerization of a vinyl alcohol-based polymer was calculated using the following formula from the measurement value of the limiting viscosity [η] of an aqueous solution at 30°C in accordance with JIS K 6726. P in the formula represents the average degree of polymerization of vinyl alcohol.

$$\log P = 1.613 \cdot \log ([\eta] \times 104/8.29)$$

<Degree of saponification (mol%)>

Measurement was performed in accordance with JIS K 6726.

<Solubility in water>

0.1 g of fibers of each of the starch compositions obtained in Examples and Comparative Examples cut to about 2 mm are put into 50 g of pure water at 0°C, and stirred at 500 rpm for 5 minutes. Several drops of an iodine solution were added, and after the coloring was confirmed, the water temperature was raised by about 2.5°C per minute while stirring, and the temperature at the time when the composition became transparent was taken as the dissolving temperature in water. On the basis of the measured dissolving temperature, solubility in water was evaluated according to the following criteria.

(Evaluation criteria for solubility in water)

⊙: The dissolving temperature is 40°C or lower.
∘: The dissolving temperature is higher than 40°C and 50°C or lower.
×: The dissolving temperature is higher than 50°C.

<Solubility in water at 60°C>

1 g of fibers obtained from each of the starch compositions obtained in Examples and Comparative Examples were immersed in 100 g of water at 60°C without stirring, the solution was filtered after being left at rest for 2 minutes, and the weight of the composition remaining without being dissolved was measured to evaluate the solubility in water at 60°C.

<Biodegradability in soil>

0.3 g of fibers obtained from each of the starch compositions obtained in Examples and Comparative Examples were put in 150 g of wet soil, and oxygen consumed by microorganisms was measured by a change in atmospheric pressure in the system to determine the degree of biodegradation. The degree of biodegradation was evaluated using a pressure sensor-type BOD measuring device OxiTop (manufactured by WTW), and natural soil (paddy soil) was used as the soil. The degree of biodegradation was calculated from an actual oxygen consumption amount and a theoretical oxygen consumption amount (ThOD) in the test system, and ThOD was calculated by the composition formula of the test substance.
The starch composition was charged into the soil under the conditions described above, and the degradation rate of the entire starch composition after being left at rest for 14 days and the degradation rates of the starch composition and the vinyl alcohol-based polymer (hereinafter abbreviated as PVA) after being left at rest for 28 days were determined by calculating the amount of oxygen consumed by microorganisms following the biodegradation of fibers on the basis of a change in the atmospheric pressure in the system. Among the degradation rates obtained, on the basis of the degradation rate of the entire composition on the 14th day, the biodegradability in soil was evaluated according to the following criteria. In the same manner, the degradation rate after being left at rest for 28 days was also measured.

(Evaluation criteria for biodegradability in soil)

⊙: The degradation rate of the entire composition on the 14th days is 90% or more.

∘: The degradation rate of the entire composition on the 14th days is 70% or more and less than 90%.

△: The degradation rate of the entire composition on the 14th days is 50% or more and less than 70%.

✕: The degradation rate of the entire composition on the 14th days is less than 50%.

Of the starch and the PVA contained in the starch composition, the starch is easily biodegraded, and the PVA is hardly biodegraded. Therefore, the biodegradability in soil may be evaluated focusing on the degradation rate of the PVA, which is less likely to be biodegraded, such as the degradation rate of the PVA on the 28th day. In that case, for example, the biodegradability in soil may be evaluated according to the following criteria.

(Evaluation criteria of biodegradability in soil by PVA)

⊙: The degradation rate of PVA on the 28th day is 70% or more.

∘: The degradation rate of PVA on the 28th day is 48% or more and less than 70%.

△: The degradation rate of PVA on the 28th day is 30% or more and less than 48%.

✕: The degradation rate of PVA on the 28th day is less than 30%.

<Strength of fiber>

In accordance with JIS L 1013, a pre-moisture conditioned yarn was measured under the conditions specified by a test length of 20 cm, an initial load of 0.25 cN/dtex and a tensile speed of 50%/min, and an average value at n = 20 was adopted as the strength of the fiber. The fiber fineness (dtex) was determined by a mass method.

<Formability (spinnability)>

The formability (spinnability) at the time of producing a fiber by the method described in the following Examples and Comparative Examples was evaluated as o when the fiber could be formed without any problems, or evaluated as ✕ when the fiber could not be formed.

<Example 1>

Starch 1 (waxy corn starch) having an amylopectin ratio of 100%, vinyl alcohol-based polymer 1 having a degree of polymerization of 1700 and a degree of saponification of 88 mol%, and sorbitol as a plasticizer were added to water at a mass ratio of 60 : 30 : 10, and the mixture was stirred and dissolved at 140°C for 2 hours, affording a spinning dope having a total concentration of the vinyl alcohol-based polymer and the starch of 55% by mass. The spinning dope was extruded into air at 120°C through a nozzle having 70 holes with a hole diameter of 0.1 mmφ, dried, and then wound up, affording an unstretched fiber. The dry original yarn obtained was subjected to dry-heat stretching at 130°C under the condition specified by a dry-heat draw ratio of 2.0 times to produce a fiber formed of a starch composition. The total draw ratio (hereinafter, sometimes referred to as TD) of the fiber obtained was 2.0 times, and the spinnability of the starch composition was good. In addition, when the biodegradability of the resulting starch composition in soil was measured according to the above method, the degradation rate of the entire starch composition after being left at rest for 14 days was 72.6%, the degradation rate of the starch composition after being left at rest for 28 days was 79.3%, and the degradation rate of PVA was 48.3%. Therefore, the evaluation result of biodegradability in soil was o, and the evaluation result of biodegradability in soil by PVA was o.

<Example 2>

A fiber formed of a starch composition was produced in the same manner as in Example 1 except that starch 2 (tapioca starch) having an amylopectin ratio of 83% was used instead of starch 1, and the total concentration of the vinyl alcohol-based polymer and the starch was 55% by mass. The total draw ratio (hereinafter, sometimes referred to as TD) of the fiber obtained was 2.0 times, and the spinnability of the starch composition was good. In addition, when the biodegradability of the resulting starch composition in soil was measured according to the above method, the degradation rate of the entire starch composition after being left at rest for 14 days was 74.1%, the degradation rate of the starch composition after being left at rest for 28 days was 79.6%, and the degradation rate of PVA was 49.1%. Therefore, the evaluation result of biodegradability in soil was o, and the evaluation result of biodegradability in soil by PVA was o.

<Example 3>

A fiber formed of a starch composition was produced in the same manner as in Example 1 except that starch 3 (a blend of starch 1 and starch 4) having an amylopectin ratio of 70% was used instead of starch 1. The total draw ratio (hereinafter, sometimes referred to as TD) of the fiber obtained was 2.0 times, and the spinnability of the starch composition was good. In addition, it is expected that when the biodegradability of the resulting starch composition in soil is measured according to the above method, the degradation rate of the entire starch composition after being left at rest for 14 days is about 70%, the degradation rate of the starch composition after being left at rest for 28 days is about 77%, the degradation rate of PVA is about 40%, the evaluation result of the biodegradability in soil is ○, and the evaluation result of the biodegradability in soil by PVA is △. The predicted values of biodegradability are results obtained by drawing an approximate curve from a plurality of other measurement results of the biodegradation rate and the amylopectin ratio, and calculating the predicted values from the approximate curve. The same applies to the predicted values of biodegradability in Comparative Example 2 below.

<Example 4>

Starch 1 having an amylopectin ratio of 100%, vinyl alcohol-based polymer 1 having a degree of polymerization of 1700 and a degree of saponification of 88 mol%, and sorbitol as a plasticizer were added to water at a mass ratio of 80 : 10 : 10, and the mixture was stirred and dissolved at 140°C for 2 hours, affording a spinning dope having a total concentration of the vinyl alcohol-based polymer and the starch of 65% by mass. A fiber formed of a starch composition was produced in the same manner as in Example 1 except that this spinning dope was used. The total draw ratio (hereinafter, sometimes referred to as TD) of the fiber obtained was 1.0 time, and the spinnability of the starch composition was good. In addition, when the biodegradability of the resulting starch composition in soil was measured according to the above method, the degradation rate of the entire starch composition after being left at rest for 14 days was 102%, the degradation rate of the starch composition after being left at rest for 28 days was 107.7%, and the degradation rate of PVA was 138.5%. Therefore, the evaluation result of biodegradability in soil was ⊙, and the evaluation result of biodegradability in soil by PVA was ⊙.

<Example 5>

Starch 1 having an amylopectin ratio of 100%, vinyl alcohol-based polymer 1 having a degree of polymerization of 1700 and a degree of saponification of 88 mol%, and sorbitol as a plasticizer were added to water at a mass ratio of 40 : 50 : 10, and the mixture was stirred and dissolved at 140°C for 2 hours, affording a spinning dope having a total concentration of the vinyl alcohol-based polymer and the starch of 50% by mass. A fiber formed of a starch composition was produced in the same manner as in Example 1 except that this spinning dope was used. The total draw ratio (hereinafter, sometimes referred to as TD) of the fiber obtained was 2.0 times, and the spinnability of the starch composition was good. In addition, when the biodegradability of the resulting starch composition in soil was measured according to the above method, the degradation rate of the entire starch composition after being left at rest for 14 days was 55.4%, the degradation rate of the starch composition after being left at rest for 28 days was 68.1%, and the degradation rate of PVA was 46.8%. Therefore, the evaluation result of biodegradability in soil was △, and the evaluation result of biodegradability in soil by PVA was △.

<Example 6>

A fiber formed of a starch composition was produced in the same manner as in Example 1 except that vinyl alcohol-based polymer 2 having a degree of polymerization of 1700 and a degree of saponification of 96 mol% was used instead of the vinyl alcohol-based polymer 1. The total draw ratio (hereinafter, sometimes referred to as TD) of the fiber obtained was 2.0 times, and the spinnability of the starch composition was good. In addition, it is expected that when the biodegradability of the resulting starch composition in soil is measured according to the above method, the degradation rate of the entire starch composition after being left at rest for 14 days is about 65%, the degradation rate of the starch composition after being left at rest for 28 days is about 75%, the degradation rate of PVA is about 45%, the evaluation result of the biodegradability in soil is △, and the evaluation result of the biodegradability in soil by PVA is △. The predicted values of biodegradability are results calculated from the finding that biodegradability decreases as the degree of saponification of a vinyl alcohol-based polymer increases. The same applies to the predicted values of biodegradability in Comparative Example 3 below.

<Example 7>

Starch 1 having an amylopectin ratio of 100% and vinyl alcohol-based polymer 1 having a degree of polymerization of 1700 and a degree of saponification of 88 mol% were added to water at a mass ratio of 90 : 10, and the mixture was stirred and dissolved at 140°C for 2 hours, affording a spinning dope having a total concentration of the vinyl alcohol-based polymer and the starch of 65% by mass. A fiber formed of a starch composition was produced in the same manner as in Example 1 except that this spinning dope was used. The total draw ratio (hereinafter, sometimes referred to as TD) of the fiber obtained was 1.0 time, and the spinnability of the starch composition was not good but was at a satisfactory level. In addition, it is expected that when the biodegradability of the resulting starch composition in soil is measured according to the above method, the degradation rate of the entire starch composition after being left at rest for 14 days is about 100%, the degradation rate of the starch composition after being left at rest for 28 days is about 100%, the degradation rate of PVA is about 100%, the evaluation result of the biodegradability in soil is ⊙, and the evaluation result of the biodegradability in soil by PVA is ⊙.

<Comparative Example 1>

A fiber formed of a starch composition was produced in the same manner as in Example 1 except that starch 4 (modified amylose corn starch) having an amylopectin ratio of 30% was used instead of starch 1. The total draw ratio (hereinafter, sometimes referred to as TD) of the fiber obtained was 2.0 times, and the spinnability of the starch composition was good. In addition, when the biodegradability of the resulting starch composition in soil was measured according to the above method, the degradation rate of the entire starch composition after being left at rest for 14 days was 57.8%, the degradation rate of the starch composition after being left at rest for 28 days was 68.7%, and the degradation rate of PVA was 21.8%. Therefore, the evaluation result of biodegradability in soil was △, and the evaluation result of biodegradability in soil by PVA was ×.

<Comparative Example 2>

A fiber formed of a starch composition was produced in the same manner as in Example 1 except that starch 5 (a blend of starch 1 and starch 4) having an amylopectin ratio of 50% was used instead of starch 1. The total draw ratio (hereinafter, sometimes referred to as TD) of the fiber obtained was 2.0 times, and the spinnability of the starch composition was good. In addition, it is expected that when the biodegradability of the resulting starch composition in soil is measured according to the above method, the degradation rate of the entire starch composition after being left at rest for 14 days is about 65%, the degradation rate of the starch composition after being left at rest for 28 days is about 74%, the degradation rate of PVA is about 32%, the evaluation result of the biodegradability in soil is △, and the evaluation result of the biodegradability in soil by PVA is △.

<Comparative Example 3>

A fiber formed of a starch composition was produced in the same manner as in Example 1 except that vinyl alcohol-based polymer 3 having a degree of polymerization of 1700 and a degree of saponification of 98 mol% was used instead of the vinyl alcohol-based polymer 1. The total draw ratio (hereinafter, sometimes referred to as TD) of the fiber obtained was 2.0 times, and the spinnability of the starch composition was good. In addition, when the biodegradability of the resulting starch composition in soil is measured according to the above method, the degradation rate of the entire starch composition after being left at rest for 14 days is about 58%, the degradation rate of the starch composition after being left at rest for 28 days is about 65%, the degradation rate of PVA is about 25%. It is considered that the evaluation result of the biodegradability in soil is △, and the evaluation result of the biodegradability in soil by PVA is ×.

The solubility in water and fiber strength of the starch compositions obtained in Examples and Comparative Examples were evaluated in accordance with the methods described above. The results obtained are shown in Table 1. In addition, the solubility in water at 60°C of the fibers obtained in Example 1 and Comparative Example 1 was evaluated in accordance with the method described above. As a result, the residue obtained after filtration was 3% and the solubility in water at 60°C was good in Example 1, whereas in Comparative Example 1, the residue obtained after filtration was 34% and it was confirmed that the solubility in water at 60°C was insufficient. Regarding the strength, the numerical values in parentheses in Table 1 are predicted values. The present inventor has found that when the content of PVA in a starch composition is high, when the degree of saponification of PVA is high, or when the amylopectin ratio of a starch is high, the strength tends to be high. The numerical values in parentheses in Table 1 regarding the strength are predicted values derived from this tendency.

[Table 1]

| | | Composition [% by mass] | | | Degree of saponification of PVA [mol%] | Starch amylopectin ratio [%] | Proportion [% by mass] based on total mass of (a) and (b) | | Evaluation of solubility in water | | Strength [cN/dtex] |
|---|---|---|---|---|---|---|---|---|---|---|---|
| | | (a) Starch | (b) PVA | (c) Plasticizer | | | (a) Starch | (b) PVA | Dissolving temperature [°C] | Evaluation | |
| Example | 1 | 60 | 30 | 10 | 88 | 100 | 67 | 33 | 38.0 | ⊙ | 0.8 |
| | 2 | 60 | 30 | 10 | 88 | 83 | 67 | 33 | 42.2 | ○ | 0.54 |
| | 3 | 60 | 30 | 10 | 88 | 70 | 67 | 33 | 49.3 | ○ | (0.5) |
| | 4 | 80 | 10 | 10 | 88 | 100 | 89 | 11 | 36.9 | ⊙ | 0.3 |
| | 5 | 40 | 50 | 10 | 88 | 100 | 44 | 56 | 34 | ⊙ | 1.28 |
| | 6 | 60 | 30 | 10 | 96 | 100 | 67 | 33 | 49.6 | ○ | (0.9) |
| | 7 | 90 | 10 | 0 | 88 | 100 | 90 | 10 | 36 | ⊙ | (0.2) |
| Comparative Example | 1 | 60 | 30 | 10 | 88 | 30 | 67 | 33 | 54.2 | × | 0.36 |
| | 2 | 60 | 30 | 10 | 88 | 50 | 67 | 33 | 52.7 | × | (0.4) |
| | 3 | 60 | 30 | 10 | 98 | 100 | 67 | 33 | 53.2 | × | (1.0) |

**Claims**

1. A starch composition comprising a starch and a vinyl alcohol-based polymer, wherein the starch has an amylopectin ratio of 70% or more, the vinyl alcohol-based polymer has a degree of saponification of 96 mol% or less, and based on a total mass of the starch and the vinyl alcohol-based polymer, a ratio of the starch is 40 to 90% by mass and a ratio of the vinyl alcohol-based polymer is 10 to 60% by mass.

2. The starch composition according to claim 1, wherein the starch composition has a dissolving temperature in water of 50°C or lower.

3. The starch composition according to claim 1 or 2, wherein the starch composition further comprises a plasticizer.

4. The starch composition according to any one of claims 1 to 3, wherein an amount of a structural unit derived from a vinyl monomer containing an oxyalkylene group in the vinyl alcohol-based polymer is 1 mol% or less based on an amount of all structural units contained in the vinyl alcohol-based polymer.

5. The starch composition according to any one of claims 1 to 4, wherein an amount of a structural unit other than a structural unit derived from a vinyl ester monomer, a vinyl alcohol structural unit, and a vinyl acetal structural unit in the vinyl alcohol-based polymer is 10% by mass or less based on an amount of all structural units contained in the vinyl alcohol-based polymer.

6. The starch composition according to any one of claims 1 to 5, wherein a biodegradation rate in a soil at 14 days is 50% or more.

7. A formed article formed of the starch composition according to any one of claims 1 to 6.

8. The formed article according to claim 7, wherein the formed article is a film, a fiber, a nonwoven fabric, a woven fabric, a braid, or a tow.

## INTERNATIONAL SEARCH REPORT

| International application No. |
|---|
| **PCT/JP2022/016894** |

**A. CLASSIFICATION OF SUBJECT MATTER**

*C08L 3/02*(2006.01)i; *C08L 29/04*(2006.01)i; *D01F 6/50*(2006.01)i; *D01F 9/00*(2006.01)i
FI:  C08L3/02; C08L29/04; D01F6/50 Z; D01F9/00 Z

According to International Patent Classification (IPC) or to both national classification and IPC

**B. FIELDS SEARCHED**

Minimum documentation searched (classification system followed by classification symbols)

C08L3/02; C08L29/04; D01F6/50; D01F9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2008/126635 A1 (NIPPON PAPER INDUSTRIES CO., LTD.) 23 October 2008 (2008-10-23)<br>paragraphs [0011], [0041], [0043]-[0044], etc. | 1-2, 4-8 |
| A | JP 2002-236361 A (FUJI PHOTO FILM CO LTD) 23 August 2002 (2002-08-23)<br>paragraph [0071] | 1-8 |
| A | JP 62-288644 A (KURARAY CO LTD) 15 December 1987 (1987-12-15) | 1-8 |
| A | JP 62-288643 A (KURARAY CO LTD) 15 December 1987 (1987-12-15) | 1-8 |
| A | JP 2014-31494 A (DM NOVAFOAM LTD) 20 February 2014 (2014-02-20) | 1-8 |
| A | JP 8-503985 A (PARKE DAVIS & COMPANY) 30 April 1996 (1996-04-30) | 1-8 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/016894**

| Patent document cited in search report | | | Publication date (day/month/year) | Patent family member(s) | | | Publication date (day/month/year) |
|---|---|---|---|---|---|---|---|
| WO | 2008/126635 | A1 | 23 October 2008 | US | 2010/0062935 | A1 | |
| | | | | paragraphs [0032], [0077]-[0078], etc. | | | |
| | | | | EP | 2130681 | A2 | |
| | | | | CN | 101652253 | A | |
| JP | 2002-236361 | A | 23 August 2002 | (Family: none) | | | |
| JP | 62-288644 | A | 15 December 1987 | US | 4835198 | A | |
| | | | | EP | 252303 | A2 | |
| | | | | KR | 10-1990-0003355 | B1 | |
| JP | 62-288643 | A | 15 December 1987 | US | 4835198 | A | |
| | | | | EP | 252303 | A2 | |
| | | | | KR | 10-1990-0003355 | B1 | |
| JP | 2014-31494 | A | 20 February 2014 | (Family: none) | | | |
| JP | 8-503985 | A | 30 April 1996 | US | 5393804 | A | |
| | | | | EP | 670863 | A1 | |
| | | | | KR | 10-1996-7000302 | A | |
| | | | | KR | 10-1996-0700302 | A | |
| | | | | CN | 1089279 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3249208 A

- JP H4153309 A

**Non-patent literature cited in the description**

- **KOBUNSHI RONBUNSHU.** *Japanese Journal of Polymer Science and Technology,* vol. 50 (10), 767-774

- Biodegradable Polymers and Plastics. The Royal Society of Chemistry, 101-110
- *Carbohydrate Research,* vol. 180, 301-313
- *Starch/Starke,* vol. 42, 302-305